# EUROPÄISCHE PATENTSCHRIFT

(11) **EP 0 385 071 B1**
(45) Veröffentlichungstag und Bekanntmachung des Hinweises auf die Patenterteilung: **24.08.1994**
(21) Anmeldenummer: 90100690.8
(22) Anmeldetag: 13.01.1990
(51) Int. Cl.: B29D 30/06

(54) **Verfahren zum Verbinden einer Karkasse für Schlauchreifen mit einem Gurtband**
Method for joining a tubular tyre carcass to a tread strip
Procédé de liaison de la carcasse d'un pneu tubulaire avec une ceinture

(30) Priorität: 27.02.1989 DE 3906046
(43) Veröffentlichungstag der Anmeldung: 05.09.1990
(73) Patentinhaber: Continental Aktiengesellschaft, 30165 Hannover (DE)
(72) Erfinder: Mahling, Rolf, D-3540 Korbach (DE); Peter, Thomas, D-3549 Twistetal 2 (DE)

(56) Entgegenhaltungen:
- EP-A- 0 133 072
- FR-A- 2 347 216
- FR-A- 2 418 076
- FR-A- 2 435 344
- FR-A- 2 493 235
- US-A- 2 010 767

## Beschreibung

Die Erfindung bezieht sich auf ein Verfahren zum Verbinden einer Karkasse für Schlauchreifen mit einem Gurtband, das die radial innere Seite des Schlauchreifens schützt, wobei die Verbindungsfläche mit Gummilösung eingestrichen wird, das Gurtband aufgelegt und anschließend die Verbindungszone von Schlauchreifen und Gurtband vulkanisiert wird. Üblicherweise wird als Gummilösung eine Naturkautschuklösung verwendet. Hiermit wird die Verbindungsfläche sowohl auf der Karkasse als auch auf dem aufzubringenden Gurtband selbst je nach Ausführung sechs- bis zwanzigmal eingestrichen. Nachdem die Verbindungsfläche hierdurch klebrig gemacht worden ist, wird das Gurtband für kurze Zeit gegen die Karkasse gedrückt. Die Vulkanisation erfolgt bei Raumtemperatur und erfordert etwa drei Wochen bis drei Monate. Der weit überwiegende Teil der Vernetzung wird also in freier Vulkanisation erreicht.

Neben der sehr langen Vulkanisationsdauer hat dieses bekannte Verfahren, welches der nächstliegende Stand der Technik ist, den Nachteil, daß das Gurtband, das den Schlauchreifen vor von der Felge ausgehenden Anscheuerungen schützen soll, nicht so fest auf der Karkasse sitzt, daß örtliche Ablösungen des Gurtbandes bei hoher Beanspruchung, wie sie bei Fahrradrennen bisweilen auftreten, mit Sicherheit ausgeschlossen sind.

Aus der FR-A-2 418 076 ist ein Herstellungsverfahren für einen Schlauchreifen bekannt, welcher keinen Schlauch enthalten soll sondern stattdessen verbunden mit der Innenseite der Karkasse eine luftdichte Schicht, wobei die luftdicht beschichtete Karkasse in dem im Querschnitt noch flachen Zustand auf einer Heiztrommel unter dem Druck einer Membrane vulkanisiert wird und nach der Vulkanisation die beiden Karkaßränder zusammengeführt und durch "Schweißung" miteinander verbunden werden, wozu das provisorisch zum Torus gefügte Gebilde auf eine Heiztrommel montiert wird, auf der die zu festigende Fügestelle kräftig bis zum Abschluß ihrer Vulkanisation zusammengedrückt wird. Auch bei dieser zweiten Vulkanisation kann der Druck auf die Heiztrommel durch eine Membrane erfolgen.

Reifen gemäß der FR-A-2 418 076 weisen kein Gurtband auf und benötigen auch keines, da die Verbindung zwischen beiden Karkaßrändern nicht durch den oder die Fäden einer Naht, die gegen Anscheuerungen aufgrund der Spannungskonzentration in ihnen sehr empfindlich sind, erzeugt wird sondern durch stoffschlüssige Verbindung.

Aufgabe der Erfindung ist es, ein Verfahren zum Verbinden einer Schlauchreifenkarkasse mit einem Gurtband anzugeben, das eine wesentlich höhere Ablösefestigkeit zwischen dem Gurtband und der Karkasse ergibt.

Die Aufgabe wird erfindungsgemäß dadurch gelöst, daß der Schlauchreifen in seinem Zenit derartig durch zusätzliche oder überlappende Lagen versteift wird, daß seine äußere Hälfte in der Umfangsrichtung steifer ist als seine innere Hälfte, daß die Gummilösung unter Vermeidung von Ultra-Beschleunigern so viel Vernetzungsmittel enthält, daß bei der gewählten Vulkanisationstemperatur sich eine Vulkanisationszeit zwischen einer Drittel Minute und zehn Minuten ergibt, daß der mit dem Gurtband versehene Schlauchreifen in seiner Gebrauchsstellung auf eine an sich bekannte ringförmige Heiztrommel gezogen wird, die jedoch im Unterschied zur FR-A-2 418 076 eine umlaufende Rinne aufweist, daß der Schlauchreifen aufgepumpt wird und dabei im Umfang schrumpft und die zu vulkanisierende Verbindung zwischen ihm und dem Gurtband zusammendrückt. Die "ringförmige Heiztrommel" wird im Rahmen dieser Anmeldung auch kurz als "Heiztrommel" oder "beheizbarer Ring" oder "Heizring" oder kurz "Ring" bezeichnet.

Dadurch daß der Druck während der gesamten Vulkanisationszeit aufrecht erhalten bleibt, wird ein höherer Vernetzungsgrad und eine höhere Ablösefestigkeit erreicht. Gemäß der Erfindung ist zum Druckaufbau in der Verbindungsfläche kein analog dem felgenähnlichen Heizring ausgebildeter Außenring erforderlich; durch Aufpumpen wird die Diagonalkarkasse selbst zum drückenden Werkzeug. Dabei wird ausgenutzt, daß die Diagonalkarkasse für Schlauchreifen infolge ihres unterkritischen Fadenwinkels (40 bis 45°) bei Druckerhöhung ihren Innendurchmesser verkleinert. Die gleichzeitige Verwendung des Werkstückes Karkasse als Werkzeug erspart nicht nur den Aufwand für einen Außenring, sondern ermöglicht auch eine über den Umfang besonders gleichmäßige Druckverteilung.

Schlauchreifen weisen in ihrem Querschnitt eine inhomogene Steifigkeitsverteilung auf. Die im allgemeinen an der Innenseite angeordnete Naht, die nach Einfügung des luftdichten Schlauches verschlossen wird, hat infolge der zur Nahtausbildung erforderlichen Karkaßumbucke eine höhere Steifigkeit als die umgebenden ungenähten Karkaßzonen. Gemäß dem ersten kennzeichnenden Merkmal ist der Schlauchreifen radial außen mindestens so weit versteift, daß seine äußere Hälfte in der Umfangsrichtung geringfügig steifer ist als seine innere Hälfte. Dadurch wird die an den meisten Schlauchreifen zu beobachtende Erscheinung vermieden, daß sich der Schlauchreifen beim Schrumpfen verdrillt. Hierdurch wird ein sicherer Sitz in dem Heizring erzielt.

Vorzugsweise wird zunächst der Schlauchreifen in eine solchermaßen verdrillte Stellung gezwungen, daß die Seite, die in der Gebrauchsstellung innen liegt, außen liegt. In dieser invertierten Stellung wird nach Klebrigmachen der Verbindungsfläche das Gurtband aufgetragen. Der Schlauch wird dann wieder in seine Gebrauchsstellung überführt und auf den Haizring aufgezogen. Vorzugsweise wird der Heizring mit seiner Rinne, auf den der Schlauchreifen aufgezogen wird, auf eine Temperatur zwischen 120° C und 210° C aufgeheizt.

Vorzugsweise weist der Heizring dafür einen Hohlraum auf. Die Aufheizung kann ausgehend von dem Hohlraum dadurch erfolgen, daß durch den Hohlraum ein heißes Gas oder eine heiße Flüssigkeit hindurchgeleitet wird oder dadurch, daß in dem Hohlraum elektrische Heizelemente angeordnet sind. Dadurch, daß die Vulkanisation nun bei wesentlich höheren Temperaturen als bei der zu diesem Zweck bislang gebräuchlichen Raumtemperatur abläuft, werden wesentlich kürzere Vulkanisationszeiten erzielt. Erst diese kurzen Vulkanisationszeiten ermöglichen es, daß die Verbindungsfläche während der gesamten Vulkanisationsdauer, die von bislang mehreren Monaten nun auf ein in Minuten anzugebendes Zeitintervall verkürzt werden, unter Druck gehalten wird und nicht wie bislang im wesentlichen frei vulkanisiert wird. Die infolge Nitrosaminabspaltung äußerst gesundheitsgefährlichen Ultra-Beschleuniger, wie etwa Thiurame oder Dithiocarbamate sind gemäß der Erfindung überflüssig.

Vorzugsweise wird die Verbindungsfläche zwischen Gurtband und Schlauchreifenkarkasse vor Auflegen des Gurtbandes nur einmal mit Gummilösung eingestrichen. Vorteilhafterweise wird sowohl die Verbindungsfläche auf der Seite der Karkasse als auch die Verbindungsfläche auf der Seite des Gurtbandes einmal eingestrichen. Das einmalige Einstreichen reicht aus, weil infolge der zuverlässigen Druckbeaufschlagung die Gummilösung pro Auftrag wesentlich dicker aufgestrichen werden kann als bislang im Stand der Technik bekannt. Dadurch, daß sowohl die Karkasse wie auch das Gurtband einmal eingestrichen werden, wird eine besonders gute Anfangsklebrigkeit erzielt, die die Konfektion erleichtert.

Vorteilhafterweise liegt der beheizte Ring, auf den der mit dem Gurtband versehene Schlauchreifen aufzuziehen ist, im wesentlichen waagerecht. Das untere der beiden Hörner, die die Rinne des Ringes begrenzen, weist vorzugsweise einen größeren Außendurchmesser auf als das obere Horn. Die Überhöhung des unteren Hornes verhindert ein Durchfallen des Reifens nach unten und dient gleichzeitig als Zentrierhilfe. Diese Anordnung läßt ein besonders rasches Aufziehen des Schlauchreifens zu und verhindert so lokale Überheizungen.

Besonders vorteilhaft ist es, an dem Heizring eine etwas heißere Stelle vorzusehen und an dieser Stelle das Schlauchreifenventil zu positionieren. Der erhöhte Wärmebedarf an dieser Stelle wird dann durch die erhöhte Temperatur vollständig kompensiert und ergibt über dem Umfang einen gleichmäßigen Vulkanisationsgrad. Wenn der Heizring durch Durchleitung eines heißen Mediums beheizt wird, liegt die heißeste Stelle in der Nähe des Heizmittelzuflusses. Es sollte also an dieser Stelle das Schlauchreifenventil positioniert werden.

Wie zuvor schon ausgeführt, weisen die meisten Schlauchreifen eine Naht auf. Diese Naht zieht eine Verdickung nach sich. Um dennoch eine gleichmäßige Anpressung des anzubindenden Gurtbandes zu erzielen, wird vorgeschlagen, daß der beheizte Ring 1, der eine von zwei Hörnern 11, 12 begrenzte Rinne 10 aufweist, an der tiefsten Stelle der Rinne 10 eine schmale Rille 13 aufweist zur Aufnahme der Karkaßnaht 7 und der zur Nahtausbildung erforderlichen Karkaßumbucke 6 des Schlauchreifens

Es versteht sich, daß der Querwölbungsradius der Rinne im Heizring in etwa dem Querradius des zu bearbeitenden Schlauchreifens entsprechen soll. Um eine besonders hohe Anpressung an den Gurtbandrändern, die besonders ablösegefährdet sind, zu erreichen, empfiehlt es sich, den Rinnenquerradius geringfügig kleiner zu wählen als den Querradius des Schlauches, vorzugsweise 92 % bis 98 % davon.

Die Erfindung wird nachfolgend anhand einer Figur näher erläutert. Diese Figur zeigt einen beheizten Ring 1, auf den der Schlauchreifen 2 zur Vulkanisation der Verbindung mit dem Gurtband 3 durch die mit Pfeil 4 angedeutete axiale Bewegung aufzuziehen ist.

Der Schlauchreifen ist nur stark vereinfacht dargestellt mit seiner zweilagigen Diagonalkarkasse 5, die radial innen unter Ausbildung von Umbucken 6 nach Einfügung eines nicht dargestellten Schlauches mittels einer Naht 7 geschlossen ist. Die Fadenwinkel in den Karkaßlagen sind mit 43° so gewählt, daß der Schlauchreifen bei Fülldruckerhöhung seinen Innenradius Rᵢ verkleinert. Im Zenitbereich ist zwischen dem Laufstreifen 8 und der Karkasse 5 ein gürtelähnlicher, zweilagiger Verstärkungsstreifen 9 vorgesehen. Dieser Verstärkungsstreifen 9 dient nicht nur der Erhöhung des Penetrationswiderstandes, also der Verringerung des Pannenrisikos, sondern auch der Beeinflussung der Steifigkeitsverteilung dahingehend, daß seine radial äußere Hälfte in der Umfangsrichtung steifer ist als seine innere Hälfte.

Der beheizte Ring 1 weist eine Rinne 10 auf, die oben durch ein Horn 11 vom maximalen Radius Rₒ und unten durch ein größeres Horn 12 vom maximalen Radius Rᵤ begrenzt ist, wobei Rₒ geringfügig größer als Rᵢ, so daß der Schlauch 2 in Rinne 10 einschnappt. Die Überhöhung des Hornes 12 ist konisch ausgebildet, verhindert das Durchfallen des Schlauchreifens 2 nach unten und erleichtert die Ausrichtung des Schlauchreifens 2 auf dem beheizten Ring 1. An seiner tiefsten Stelle weist die Rinne 10 eine umlaufende Rille 13 auf, in der die Naht 7 und die Umbucke 6 der Karkasse 5 des Schlauchreifens 2 aufgenommen werden. Hierdurch wird eine besonders gleichmäßige Anpressung des Gurtbandes an die Innenseite des Reifens 2 erzielt. Für die meisten Anwendungen ist es sinnvoll, daß das Gurtband Festigkeitsträger in bekannter Weise enthält; dies ist allerdings nicht zwingend erforderlich.

Der felgenähnliche Heizring 1 weist eine Hohlkammer 14 auf, von der aus er beheizt wird. Die hier gewählte Ausführungsform geht von einer Aufheizung mittels Durchleitung von Dampf aus. Selbstverständlich läßt die Erfindung auch andere Heizprinzipien zu.

Die Erfindung stellt ein verbessertes Verfahren vor zur Aufheizung von Gurtbändern auf Schlauchreifen. Sie offenbart überdies eine geeignete Vorrichtung zur Durchführung des Verfahrens. Mit dem erfindungsgemäßen Verfahren wird bei rascher Produktionsfolge ein erhöhter Ablösewiderstand zwischen Diagonalkarkasse und Gurtband erzielt.

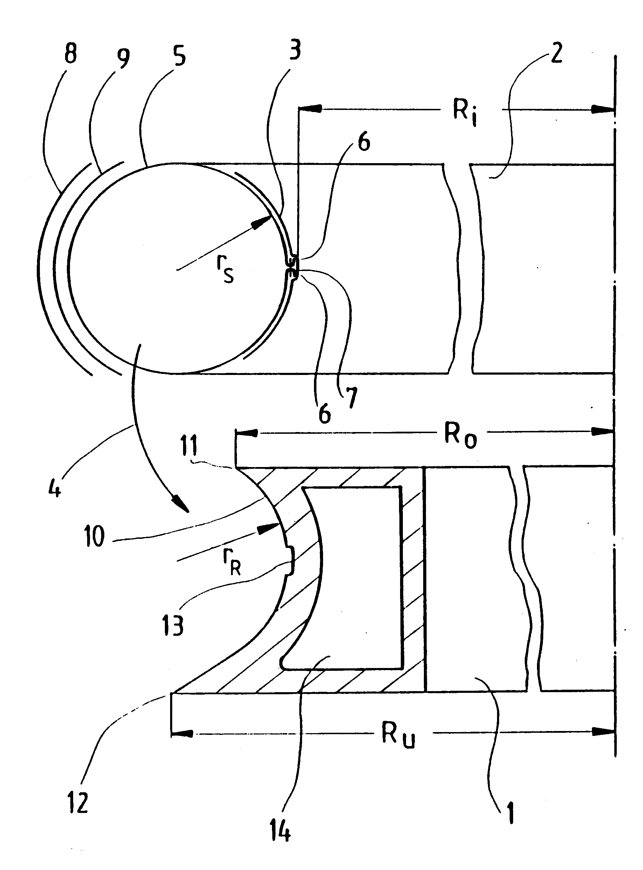

## Patentansprüche

1. Verfahren zum Verbinden einer Karkasse (5) für Schlauchreifen (2) mit einem Gurtband (3), das die radial innere Seite des Schlauchreifens (2) schützt, wobei die Verbindungsfläche mit Gummilösung eingestrichen wird, das Gurtband (3) aufgelegt und anschließend die Verbindungszone von Schlauchreifenkarkasse (5) und Gurtband (3) vulkanisiert wird,
**dadurch gekennzeichnet,** daß der Schlauchreifen (2) in seinem Zenit derartig durch zusätzliche oder überlappende Lagen (8, 9) versteift wird, daß seine äußere Hälfte in der Umfangsrichtung steifer ist als seine innere Hälfte, daß die Gummilösung unter Vermeidung von Ultra-Beschleunigern so viel Vernetzungsmittel enthält, daß bei der gewählten Vulkanisationstemperatur sich eine Vulkanisationszeit zwischen einer Drittel Minute und zehn Minuten ergibt, daß der mit dem Gurtband (3) versehene Schlauchreifen (2) in seiner Gebrauchsstellung auf eine an sich bekannte ringförmige Heiztrommel (1) gezogen wird, die jedoch eine umlaufende Rinne (10) aufweist, daß der Schlauchreifen (2) aufgepumpt wird und dabei im Umfang schrumpft und die zu vulkanisierende Verbindung zwischen ihm (2) und dem Gurtband (3) zusammendrückt.

2. Verfahren nach Anspruch 1 dadurch gekennzeichnet, daß die Heiztrommel (1) auf eine Temperatur zwischen 120°C und 210°C aufgeheizt wird.

3. Verfahren nach Anspruch 1 dadurch gekennzeichnet, daß die Verbindungsfläche zwischen Gurtband (3) und Schlauchreifenkarkasse (5) vor Auflegen des Gurtbandes (3) nur einmal mit Gummilösung eingestrichen wird.

4. Verfahren nach Anspruch 3 dadurch gekennzeichnet, daß sowohl die Verbindungsfläche auf der Seite der Karkasse (5) als auch die Verbindungsfläche auf der Seite des Gurtbandes (3) vor Auflegen des Gurtbandes (3) einmal mit Gummilösung eingestrichen wird.

5. Ringförmige Heiztrommel (1) als Vorrichtung zur Durchführung eines Verfahrens gemäß Anspruch 1 **dadurch gekennzeichnet,** daß sie (1), auf die (1) der mit dem Gurtband (3) versehene Schlauchreifen (2) aufzuziehen ist, im wesentlichen waagerecht liegt und, daß das untere (12) der beiden Hörner (11, 12), die die Rinne (10) in der Heiztrommel (1) begrenzen, einen größeren Außenradius (Rᵤ) aufweist als das obere Horn (11).

6. Ringförmige Heiztrommel (1) als Vorrichtung zur Durchführung eines Verfahrens gemäß Anspruch 1 **dadurch gekennzeichnet,** daß sie (1) eine von zwei Hörnern (11, 12) begrenzte Rinne (10) und an deren (10) tiefster Stelle eine schmale Rille (13) aufweist zur Aufnahme der Karkaßnaht (7) und der zur Nahtausbildung erforderlichen Karkaßumbucke (6).

7. Ringförmige Heiztrommel (1) als Vorrichtung zur Durchführung eines Verfahrens gemäß Anspruch 1 **dadurch gekennzeichnet,** daß sie (1) eine von zwei Hörnern (11, 12) begrenzte Rinne (10) aufweist, deren Querwölbungsradius (r_{R}) 92 % bis 98 % des Querradius (r_{S}) des zu bearbeitenden Schlauchreifens (2) beträgt.

8. Heiztrommel (1) nach zumindest einem der Ansprüche 5 bis 7 dadurch gekennzeichnet, daß sie (1) einen Hohlraum (14) aufweist, von dem aus sie (1) beheizt wird.

## Claims

1. Method of joining a carcase (5) for tubular tyres (2) to a belt strip (3), which protects the radially internal surface of the tubular tyre (2), wherein the connection area is coated with rubber solution, the belt strip (3) is placed thereon, and subsequently the connection zone between tubular tyre carcase (5) and belt strip (3) is vulcanised, characterised in that the tubular tyre (2) is so reinforced in its crown by means of additional or overlapping plies (8, 9) that, in the circumferential direction, its external half is more rigid than its internal half, in that the rubber solution contains so much cross-linking agent, in order to avoid ultra-accelerators, that, at the selected vulcanisation temperature, a vulcanisation period of between one-third of a minute and ten minutes is produced, in that, in its position of use, the tubular tyre (2), which is provided with the belt strip (3), is drawn over an annular heating drum (1), which is known per se, but which has a circumferential channel (10), and in that the tubular tyre (2) is inflated and thereby shrinks in respect of the circumference and compresses the connection to be vulcanised between it (2) and the belt strip (3).

2. Method according to claim 1, characterised in that the heating drum (1) is heated to a temperature of between 120° C and 210° C.

3. Method according to claim 1, characterised in that the connection area between belt strip (3) and tubular tyre carcase (5) is coated only once with rubber solution prior to the belt strip (3) being placed thereon.

4. Method according to claim 3, characterised in that both the connection area on the side of the carcase (5) and the connection area on the side of the belt strip (3) are coated once with rubber solution prior to the belt strip (3) being placed thereon.

5. Annular heating drum (1) as a means for accomplishing a method according to claim 1, characterised in that it (1), over which (1) the tubular tyre (2), which is provided with the belt strip (3), is to be drawn, lies substantially horizontally, and in that the lower (12) of the two horns (11, 12), which define the channel (10) in the heating drum (1), has a greater external radius (Rᵤ) than the upper horn (11).

6. Annular heating drum (1) as a means for accomplishing a method according to claim 1, characterised in that it (1) has a channel (10), which is defined by two horns (11, 12), and a narrow groove (13) at the lowermost location of channel (10) for the accommodation of the carcase seam (7) and the carcase edge region (6), which is required to form the seam.

7. Annular heating drum (1) as a means for accomplishing a method according to claim 1, characterised in that it (1) has a channel (10), which is defined by two horns (11, 12) and has a transverse radius of curvature (r_{R}) of between 92 % and 98 % of the transverse radius (r_{S}) of the tubular tyre (2) to be processed.

8. Heating drum (1) according to at least one of claims 5 to 7, characterised in that it (1) has a cavity (14), from which it (1) is heated.

## Revendications

1. Procédé d'assemblage d'une carcasse (5) d'un pneu tubulaire (2) avec une ceinture (3), qui protège le côté radialement intérieur du pneu tubulaire (2), la surface d'assemblage étant enduite d'une solution de caoutchouc, la ceinture (3) posée dessus et la zone d'assemblage de la carcasse (5) du pneu tubulaire et de la ceinture (3) étant ensuite vulcanisée, caractérisé en ce que le pneu tubulaire (2) est rendu rigide à son zénith par des couches (8, 9) supplémentaires ou se recouvrant, de manière que sa moitié extérieure dans la direction périphérique soit plus rigide que sa moitié intérieure, en ce que la solution de caoutchouc, tout en évitant des ultra-accélérateurs, contient suffisamment d'agents de réticulation pour qu'à la température de vulcanisation choisie, il en résulte un temps de vulcanisation compris entre un tiers de minute et dix minutes, en ce que le pneu tubulaire (2) pourvu de la ceinture (3) est tiré dans sa position d'utilisation sur un tambour chauffant (1) annulaire, connu en soi, qui présente toutefois une gorge (10) continue, en ce que le pneu tubulaire (2) est gonflé et se resserre ainsi dans sa périphérie et comprime la liaison à vulcaniser entre luimême (2) et la ceinture (3).

2. Procédé selon la revendication 1, caractérisé en ce que le tambour chauffant (1) est chauffé à une température comprise entre 120°C et 210°C.

3. Procédé selon la revendication 1, caractérisé en ce que la surface d'assemblage entre la ceinture (3) et la carcasse (5) du pneu tubulaire est enduite d'une solution de caoutchouc encore une fois avant pose de la ceinture (3).

4. Procédé selon la revendication 3, caractérisé en ce que la surface d'assemblage sur le côté de la carcasse (5) et la surface d'assemblage sur le côté de la ceinture (3) sont enduites une fois d'une solution de caoutchouc, avant pose de la ceinture (3).

5. Tambour chauffant (1) annulaire servant de dispositif pour la mise en oeuvre d'un procédé suivant la revendication 1, caractérisé en ce qu'il (1) doit être enfilé sur le pneu tubulaire (2) pourvu de la ceinture (3), en ce qu'il se trouve sensiblement horizontalement et en ce que la corne inférieure (12) des deux cornes (11, 12), qui délimitent la gorge (10) du tambour chauffant (1), présente un plus grand rayon extérieur (Rᵤ) que la corne supérieure (11).

6. Tambour chauffant (1) annulaire servant de dispositif pour la mise en oeuvre d'un procédé suivant la revendication 1, caractérisé en ce qu'il présente une gorge (10), limitée par deux cornes (11, 12) et à son point le plus bas (10), une rainure (13) étroite destinée à loger le joint de carcasse (7) et les plis de la carcasse (6), nécessaires à la formation du joint.

7. Tambour chauffant (1) annulaire servant de dispositif pour la mise en oeuvre d'un procédé suivant la revendication 1, caractérisé en ce qu'il présente une gorge (10) limitée par deux cornes (11, 12), dont le rayon de courbure transversal (Rᵣ) représente 92 % à 98 % du rayon transversal (r_{S}) du pneu tubulaire (2) à usiner.

8. Tambour chauffant (1) selon une ou moins des revendications 5 à 7, caractérisé en ce qu'il présente une cavité (14) à partir de laquelle il (1) est chauffé.
